# EUROPEAN PATENT APPLICATION

(11) **EP 2 111 759 A1**
(43) Date of publication of application: **28.10.2009**
(21) Application number: 08007909.8
(22) Date of filing: 24.04.2008
(51) Int. Cl.: A23G 1/20, A23G 1/21, A23G 1/22, A23G 1/26, A23G 3/20, A23G 7/00

(54) **Chocolate moulding line**

(71) Applicant: AASTED-MIKROVERK APS, 3520 Farum (DK)
(72) Inventor: Refer, Jacob Christian, 3100 Hornbaek (DK)

(57) **Abstract**

Chocolate moulding production line (1) with an endless conveyor (2) for the transportation of mould plates (3) sliding in a guide (4) and a moulding station (7) with at least one separate plunger plate (8;9) carrying a plurality of plungers (10;11) as well as a depositor (13). Lifting means (12) is arranged in the moulding station (7) under the mould plates (8 or 9) and being adapted to lift up the mould plates (3) into engagement with the plunger plates (8;9) during moulding of the chocolate articles. The at least one plunger plate (8;9) is permanently fixed in a horizontally movable carrier (20), which is arranged slidable on track means (21), and the lifting means (12) is arranged in the carrier (20).

## Description

The present invention concerns the technical field of chocolate moulding production lines with an endless conveyor for the transportation of mould plates sliding in a guide. The moulding lines comprise at least one moulding station with at least one separate plunger plate carrying a plurality of plungers and being permanently fixed horizontally, as well as a least one depositor in relation to the moulding station. Furthermore is lifting means arranged in the moulding station under the mould plates and being adapted to lift up the mould plates into engagement with the plunger plates during moulding of the chocolate articles.

The mentioned moulding stations operate according to the so-called cold-pressing principle at which the plungers are immersed into chocolate already deposited into cavities in the particular mould plate. During immersion the plungers press up the liquid or flow able and deformable chocolate in the cavity to an article such as a shell with a predetermined shape. The plungers are cooled to a predetermined temperature such as typically between - 1°C and -25°C.

Generally, the chocolate mass handled by the chocolate moulding production lines encompasses all types of suspensions of non-fat particles such as sugar, milk powders and cocoa solids mixed up with a liquid fat constituent which are capable of crystallizing. When it comes to pure chocolate mass, the fat phase comprises genuine cocoa butter of until around 30%, but may comprise substitutes as well. Such substitutes can be in the form of other types of fat-containing oils. Chocolate types where the cocoa butter has been replaced wholly or partly by other fats are often named commercially as compound chocolate, in which the cocoa butter has been replaced by palm-kernel oil. Mass made of 100% fat in the form of cocoa butter or the like as compound is also possible.

The chocolate mass delivered to the line is typically tempered, meaning that whether the fat phase constitutes of genuine cocoa butter or substitutes therefore, the fat phase must be capable of crystallizing into stable crystal types, such as the β-crystals developing in genuine cocoa butter when the mass solidifies. Decisive for obtaining an even quality of the chocolate articles in relation to taste and appearance are dominantly the content and type of crystals in the mass solidified. Optimal is when the type of crystals are stable BetaV crystals only and that the content thereof in the ready tempered chocolate mass is at the desired preset content between 0.1 and 1.0% - however being constant - for example of 0.35% for a specific production. Only then the manufacturer can rely on that the quality of his chocolate products are always the same and only then eatable chocolate articles with god taste and shiny appearance are created.

After having passed through the tempering apparatus the chocolate mass is typically deposited into moulds or deposited on top of pre-made articles in the moulding station. By the industrial scale continuous process performed by the chocolate moulding lines typically between 1000 and 100.000 articles are moulded per hour. This corresponds roughly to a capacity of moulding articles in between 1 and 40 mould plates per minute in the chocolate production line.

The demands put forward by today's manufacturers of chocolate articles are increasing. On the one hand a high capacity such as the possibility of running between 5 and 40 mould plates through the moulding station per minute is desirable, and at the same time a greater flexibility of producing different articles in the same line without changes is desired as well. This means that the same production line must be able to produce more different articles without the necessity of performing time consuming change of plunger plates and or of mould plates in the line. With today's high-performance chocolate moulding lines having endless conveyors this is not possible. Instead a new different set of plunger plates must be arranged in the moulding station and all the previous mould plates must be taken out and replaced with different ones before the new articles can be produced.
This is a highly cumbersome and time-consuming operation for the crew to perform as chocolate moulding lines with endless conveyors and a capacity typically between 5 and 40 mould plates per minute comprise between 800 and 1000 mould plates in total in the production line. One can easily imagine the job to be done. Typically it takes two persons a whole week to have the job done and adjust the new plunger plates, mould plates and the line for the production of the new articles to run smoothly.

DE 10 2005 018 417 A1 discloses a cold-pressing moulding station for a chocolate production line. The moulding station has three permanently arranged plunger plates, which are permanently fixed in the same horizontal plane to a stationery support frame resting on the floor. In the stationery support frame is also supported three lifting means arranged under each of the plunger plates. The moulding station has its own short conveyor for the moulds, so that the moulding station easily can be taken in and out of a production line when required. Such a system runs typically with lower capacities such as below 5 moulds per minute due to the delicate transfer of mould plates from the separate conveyor in the moulding station and to the conveyors in the rest of the production line. It is however suggested, that a loose mould system could be used with the particular moulding station so that the particular mould plate in the station is lifted up and free from the halted conveyor chain during pressing of the articles.
The disclosure shows the same configuration of the plungers on the three plunger plates and only one corresponding configuration of cavities in the mould plates.

EP 0 715 813 A1 discloses a principle of synchronous pressing of chocolate articles during continuous travel of the conveyor and the mould plates. The disclosure is however silent about any solutions or constructions which in practice can enable the synchronous pressing.

A first problem to solve is to provide a chocolate moulding production line of the introductory art by which it is possible to lift up the loose moulds from the conveyor and at the same time obtain high production rates.

A secondary problem to solve is to provide a solution for a chocolate moulding line by which mould plates with different configurations can be used and at the same high production rates are achievable.

The invention is further described by referral to the drawing, in which
figure 1 schematically discloses a first embodiment of the chocolate moulding production line according to the invention comprising a horizontally movable carrier,
figure 2 one of the plunger plates and the underlying mould plate of the chocolate moulding production line of figure 1, seen in vertical section,
figure 3 the chocolate moulding production line of figure 1 in which a mould plate is lifted up into engagement with a first plunger plate, so that chocolate articles are being moulded,
figure 4 the chocolate moulding production line of figure 1 in which a mould plate is lifted up into engagement with a second plunger plate, so that chocolate articles with another configuration and shape are being moulded, and
figure 5 another embodiment of the chocolate moulding production line of figure 1 in which two mould plates are lifted up into pressing engagement at the same time.

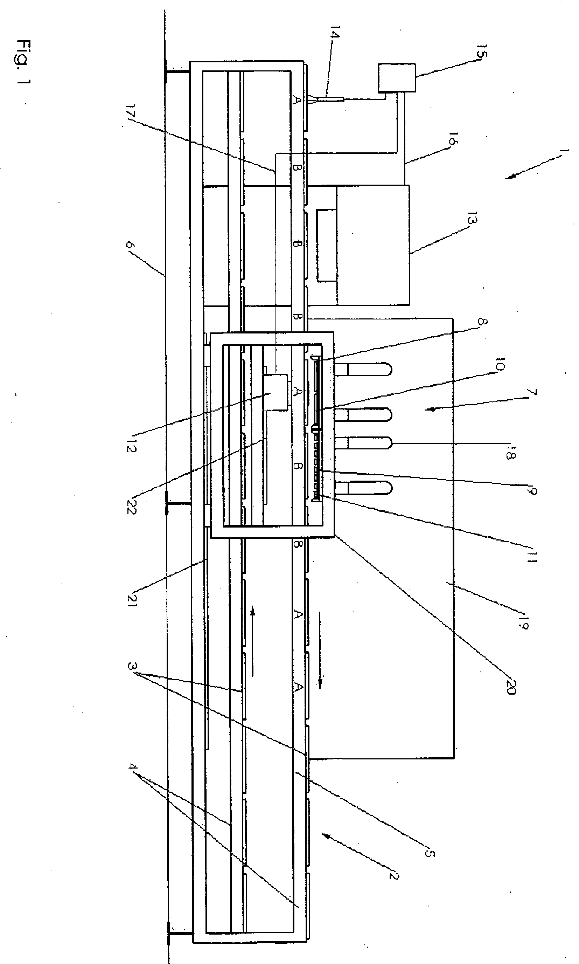

The chocolate moulding production line 1 in figure 1 is disclosed schematically in its simplest version. With this is meant that all the gear and equipment normally encompassed by moulding lines and which are not necessary to disclose for understanding the invention, is left out from the drawing. Such gear and equipment could be the driving rolls and gear motors for providing the conveyor motion and speed and which are normally arranged at each end of the line. It could also be cooling equipment for the cooled plungers in the plunger plates, it could be details of the hoisting and lowering equipment for the mould plates or it could be details of the depositor.

The chocolate moulding production line of figure 1 is also disclosed with only one depositor. Typically two or more depositors are arranged at a moulding line for achieving more than one chocolate type in the moulded part of the articles or to provide the moulded articles with a centre filling of for example nougat or cream mass.

The chocolate moulding production line according to the invention disclosed in figure 1 comprises an endless conveyor 2 for the transportation of mould plates 3 sliding in a guide 4. The endless conveyor comprises a support 5 standing on the floor 6. The support 5 carries the endless conveyor 2, all the mould plates 3 as well as the guides in which the mould plates 3 slides.

The moulding line 1 also comprises at least one moulding station 7 with two plunger plates 8 and 9 each carrying a particular set of plungers 10 and 11, each with their own configuration, respectively.

Lifting means 12 is arranged in the moulding station 7 under the moulds 3 and being adapted to lift up the moulds 3 into engagement with the plunger plates 8 or 9 during moulding of the chocolate articles.

The moulding line 1 further comprises a depositor 13 arranged for depositing chocolate mass into the cavities of the particular mould plates 3 during their passage through the depositor.

The mould plates 3 comprise mould plates with at least two different configurations A, B respectively. The mould plates 3 with the configuration A corresponds with the plunger plates 8 and the configuration of the plungers 10 and the mould plates 3 with the configuration B of the cavities corresponds with configuration of the plungers 11 at the plunger plate 9.

Further is detecting means 14 arranged for detecting the particular configuration of the mould in question on its way to entering the moulding station 13. The detecting means 14 is connected with a computing device 15, which is further connected with the depositor 13 and the lifting means 12 of the moulding station 7 by means of wires 16, 17 respectively.

In the moulding station 7 the plunger plates 8, 9 are typically feed with some kind of cooling liquid circulating in the hoses 18. As the temperature of the plungers 10, 11 are typically kept very cold such as between -5°C and - 25°C it is necessary to dehumidify the atmosphere around the plungers intensively in an encapsulated environment in a housing 19 for the plungers to be free from frost and ice build-up.

The plunger plates 8, 9 are permanently fixed to a horizontally movable carrier 20, which is arranged so that it can slide forth and back on track means such as rails 21 arranged on the moulding line frame or support 5.

The lifting means 12 itself is arranged on rails 22 arranged on the support frame 20, so that the lifting means 12 itself can slide forth and back in relation to the support frame or carrier 20 irrespective of what position the carrier is in.

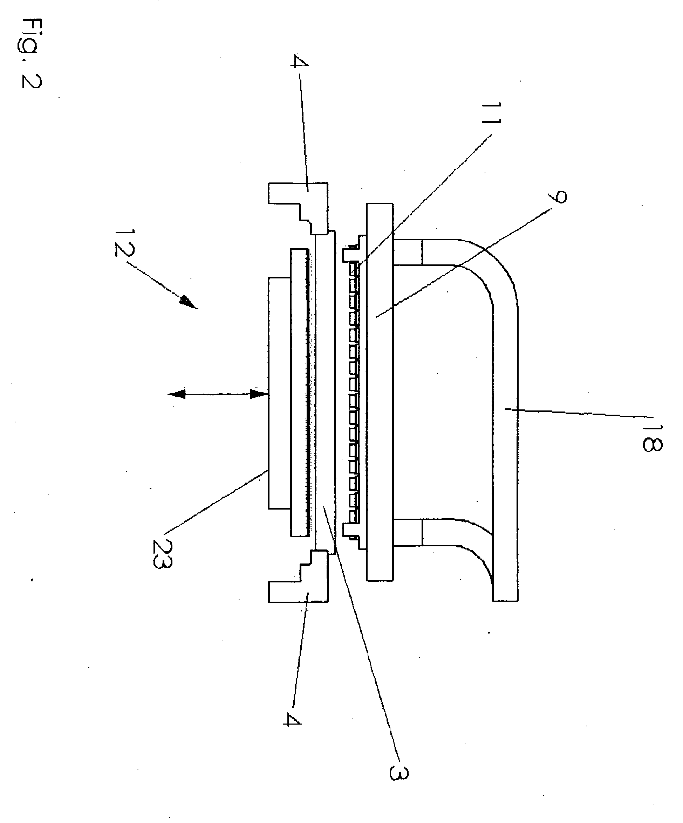

In figure 2 is schematically disclosed in vertical section the plunger plate 9 with the plungers 11 and the underlying mould plate 3 resting in the upwardly open slides 4 of the conveyor frame 2. Under the mould plate 3 is disclosed an upper part of the lifting means 12 disclosed as a planar support 23 adapted to pres and support the particular mould plate 3 from below when it is to be lifted up and into engagement with the plunger plate during pressing and moulding of the articles.

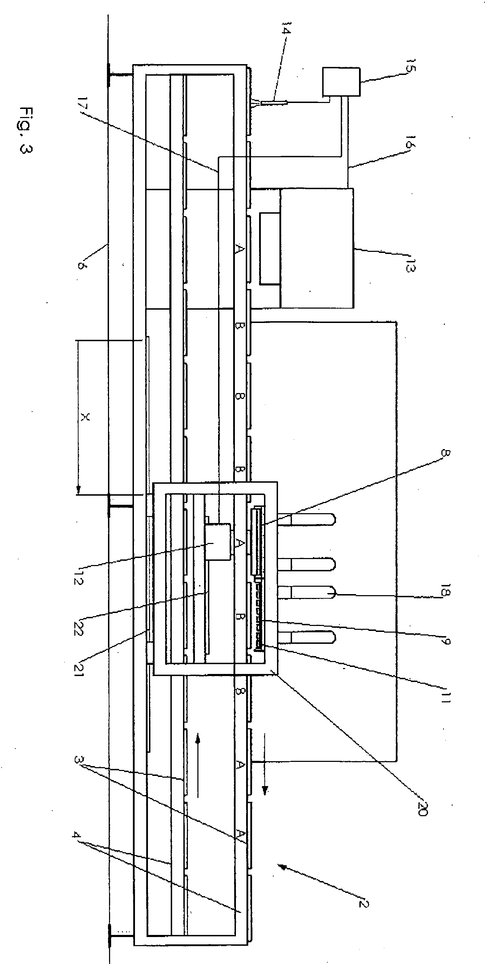

In the position of the conveyor 2 disclosed in figure 1 the particular mould plate 3 with the configuration A is detected by the detecting means 14. The detecting means 14 could be a camera or a magnetic sensor or in fact any type of sensor as long as the sensor transmits different signals for the different configurations of mould plates 3, A, B respectively. The signal is received by the calculating device 15, which computes and transmits different signals to the depositor and to the cold-pressing station, respectively of when the particular mould 3 with configuration A is to be received. Typically, the depositor receives or calculates itself appropriate chocolate type and configuration to be deposited into the mould plate 3 A. When the particular mould plate 3 with the configuration A, now filled with chocolate in its cavities, has reached the moulding station 7 and the position disclosed in figure 3 under the appropriate plunger plate 8 with the appropriate plungers 10 to be immersed, the moulding process itself can take place in that mould plate. While the carrier 20 travels with the same speed as the conveyor 2 and the mould plates 3, the lifting means 12 lifts up the planar support 23 and the particular mould plate 3 until it is fully in engagement with the plunger plate 9 and the plungers 11. During the synchronous travel of the mould plates and the carrier 20 on the track means 22 the plunger plate 8 and the particular mould plate 3 A is engaged so that the liquid chocolate is moulded into complete shape of the desired articles of the configuration A in the mould plate..

When the articles have solidified satisfactory the carrier 20 has travelled a distance X and a position such as the one disclosed in figure 3 at the rails are reached. The lifting means can quickly lower the particular mould plate 3 A down into the guide 4 again. The carrier 20 then races back again to the first position for engagement of a new mould plate with a plunger plate so the next moulding sequence can take place according to the signals detected by the sensor 14 and calculated and transmitted by the computing device 15.

The unique combination of the horizontally movable carrier 20 and the lifting means 12 being arranged in the carrier 20 makes it possible to perform pressing and moulding operations during uninterrupted continuous travel X of the carrier 20 and the conveyor with the mould plates 3. The highest possible production rate and capacity of the moulding line can then be achieved.

When highest possible production rates is then desired, it is surely advantageous when the conveyor simply keeps its speed and the support frame 20 travels in an intermittent movement forth and back on the rails 21. Then the moulding operation is performed during continuous travel of the support frame 20 with the conveyor and the moulds 3 through the moulding station.

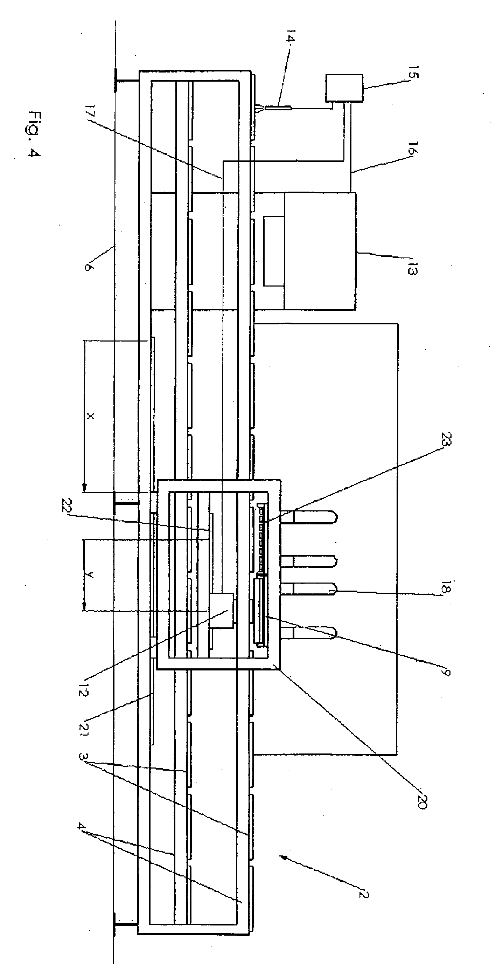

Especially high production rates can be achieved when the lifting means is adapted to move horizontally forth and back on secondary track means 22 arranged in the carrier 20. Then, the lifting means 12 can travel on its own secondary tracks 22 with a speed independent of the speed of the carrier 20. The lifting means 12 could then be guided by the control unit 15 or any other control device to assume a position on the rails 22 so that it lifts up a mould plate to engage with a particular plunger plate in the carrier 20. As disclosed in figure 4 it could for example be the right plunger plate 9.

Especially when the speed of the conveyor is high or when extra long solidification time is required this embodiment is advantageous. The longer solidification time is for example required for thicker or heavier articles. As disclosed in figure 4 the original travelling distance X of the carrier 20 can also be prolonged a distance Y of the lifting means, so that the lifting distance of the particular mould plate 3 can be extended to X+Y. This requires that the plunger plate 9 is able to slide itself on further tracks 23 in the carrier 20 from the left position and to the right position in the carrier. Then, when the carrier 20 has reached the outermost position to the right on the tracks 21 the lifting means 12 simply travels on a distance Y on the secondary track 22 in the carrier 20.

Irrespective of the order of the particular mould plates 3 with the configurations A or B in the conveyor the detecting means detects the particular configuration A or B or what ever it may be to enter the moulding station. Then mould plates with different configurations can permanently stay in the moulding line so that shift of mould plates is avoided. Also the mould plates with different configurations A or B can be arranged in the conveyor in a random manner. Permanently, the detecting means simply detects the configuration of the next mould plate in the row to enter the moulding station so the computing means can decide if and when its appropriate to proceed with a moulding procedure in the particular mould plate.

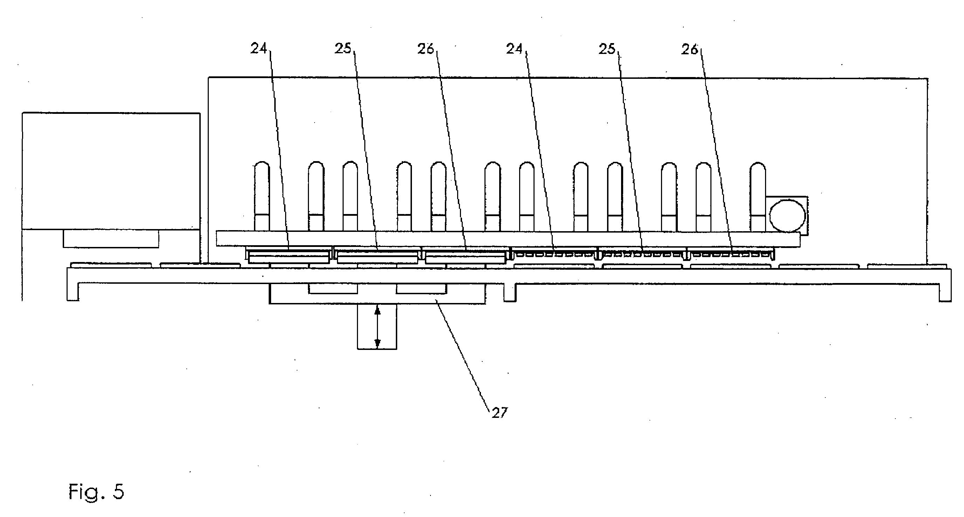

In figure 5 is schematically disclosed an embodiment with six plunger plates arranged as two identical pairs 24, 25, 26 each having different plungers. Schematically is disclosed a position where mould plates 3 with configurations C is to be pressed at a time by the plunger plates 24 which is carried by the U-formed jack 27. Then the capacity of the moulding line is doubled. With so many plunger plates and the "double" lifting means its possible to achieve a very high production capacity and at the same time operate with a chocolate moulding line having three or more different configurations of mould plates in it, such as A, B and C.

## Claims

1. Chocolate moulding production line (1) with an endless conveyor (2) for the transportation of mould plates (3) sliding in a guide (4), further comprising
a moulding station (7) with at least one separate plunger plate (8;9) carrying a plurality of plungers (10;11) and being permanently fixed horizontally, as well as a depositor (13),
that lifting means (12) is arranged in the moulding station (7) under the mould plates (8 or 9) and being adapted to lift up the mould plates (3) into engagement with the plunger plates (8;9) during moulding of the chocolate articles,
**characterised in,**
**that** the at least one plunger plate (8;9) is permanently fixed in a horizontally movable carrier (20), which is arranged slid able on track means (21),
and **that** the lifting means (12) is arranged in the carrier (20).

2. Chocolate moulding production line according to claim 1, **characterised in, that** the lifting means (12) is adapted to move horizontally forth and back on secondary track means (22) arranged in the carrier (20).

3. Chocolate moulding production line according to claim 2, **characterised in, that** the at least one plunger plate (8 or 9) is adapted to move horizontally forth and back on further track means (23) arranged in the carrier (20).

4. Chocolate moulding production line according to claim 1, **characterised in, that** the lifting means (12) comprises at least one U-formed jack (27) adapted to lift up two moulds (3) at the same time.

5. Chocolate moulding production line according to claim 1, **characterised in, that** the mould plates (8 or 9 or 24 or 25 or 26) comprise mould plates with at least two different configurations (A or B or C), and that detecting means (14) are arranged for detecting the configurations of the particular mould plates (3) before entering the moulding station (7).

6. Chocolate moulding production line according to claim 1, **characterised in, that** at least two plunger plates (8;9)are permanently fixed and having different configurations of plungers (10;11).

7. Chocolate moulding production line according to claim 1, **characterised in, that** the lifting means (12) is adapted to lift up at least two moulds (3) during the same pressing and moulding operation.
